# EUROPEAN PATENT APPLICATION

(11) **EP 4 113 729 A1**
(43) Date of publication of application: **04.01.2023**
(21) Application number: 21759605.5
(22) Date of filing: 28.01.2021
(51) Int. Cl.: H01M 50/50, H01M 50/583, H01M 50/20, B60L 3/00, B60L 50/64

(54) **BATTERY PACK AND ELECTRIC VEHICLE**

(30) Priority: 28.02.2020 CN 202010129989
(71) Applicant: BYD Company Limited, Shenzhen, Guangdong 518118 (CN)
(72) Inventor: SUN, Huajun, Shenzhen, Guangdong 518118 (CN); WANG, Gaowu, Shenzhen, Guangdong 518118 (CN); LIU, Guoxiong, Shenzhen, Guangdong 518118 (CN); ZHU, Yan, Shenzhen, Guangdong 518118 (CN)
(74) Representative: DehnsGermany Partnerschaft von Patentanwälten
(86) International application number: PCT/CN2021/074132
(87) International publication number: WO 2021/169721

(57) **Abstract**

Disclosed are a battery pack (200) and an electric vehicle. The battery pack (200) includes at least one battery unit (21). The battery unit (21) includes at least one battery string (1006). The battery string (1006) includes one or at least two cells (100). A voltage difference across the battery string (1006) is less than or equal to 60 V. When the battery string (1006) includes at least two cells (100), the cells (100) in the battery string (1006) are arranged sequentially along a first direction, and the first direction is parallel to a direction from the tail of the vehicle to the head of the vehicle.

## Description

### CROSS-REFERENCE TO RELATED APPLICATIONS

The present disclosure claims priority to Chinese Patent Application No. "202010129989.1" filed by the BYD Co., Ltd. on February 28, 2020 and entitled "BATTERY PACK AND ELECTRIC VEHICLE".

### FIELD

The present disclosure relates to the field of vehicle manufacturing technologies, and more specifically, to a battery pack and an electric vehicle.

### BACKGROUND

In an electric vehicle, due to space limitation of the electric vehicle, a battery pack is usually fixed at the bottom of the vehicle, that is, on the chassis of the vehicle. However, since the bottom of the vehicle is relatively close to the ground, the battery pack mounted at the bottom of the vehicle is extremely vulnerable to an impact in the driving process of the vehicle, resulting in a short circuit in a cell in the battery pack. Especially in the driving process of the vehicle, the impact on the bottom of the vehicle usually lasts from the head of the vehicle to the tail of the vehicle, which leads to a short circuit of a string of cells in the battery pack.

As a power source of the electric vehicle, the battery pack has a high energy density. The high voltage and the high energy density mean a high risk. When a string of cells in the battery pack is short circuited, if there is a high voltage between the string of cells, a high-voltage breakdown or a high-voltage short circuit may be caused in the battery pack instantaneously, making the battery pack easy to catch fire and explode, and an arc phenomenon tends to occur, posing a threat to the life safety of drivers and passengers.

### SUMMARY

The present disclosure aims to resolve at least one of the technical problems existing in the related art. In view of this, the present disclosure provides a battery pack and an electric vehicle, so that the voltage generated by the battery pack when a short circuit occurs in a battery string can be relatively reduced, which helps to prevent a high-voltage breakdown or a high-voltage short circuit of the battery pack, thereby improving the safety of the battery pack.

The present disclosure further provides an electric vehicle.

To achieve the above objective, the present disclosure provides a battery pack for powering a vehicle, including at least one battery unit. The battery unit includes at least one battery string. The battery string includes one or at least two cells. A voltage difference across the battery string is less than or equal to 60 V When the battery string includes at least two cells, the cells in the battery string are arranged sequentially along a first direction, and the first direction is parallel to a direction from the tail of the vehicle to the head of the vehicle.

In some examples of the present disclosure, the voltage difference across the battery string is less than or equal to 45 V

In some examples of the present disclosure, the voltage difference across the battery string ranges from 20 V to 40 V

In some examples of the present disclosure, the battery unit includes multiple battery strings. The multiple battery strings are arranged sequentially along a second direction. The second direction is a width direction of the vehicle.

In some examples of the present disclosure, the battery strings are connected in series and/ or in parallel.

In some examples of the present disclosure, when the battery string includes at least two cells, the at least two cells in the battery string are connected in series.

In some examples of the present disclosure, the length of the cell extends along the first direction.

In some examples of the present disclosure, the cell includes a first pole and a second pole. The cell has two opposite first surfaces along the first direction. The first pole and the second pole are arranged on the same first surface of the cell, or arranged on the two first surfaces of the cell respectively.

In some examples of the present disclosure, the cell includes a first pole and a second pole. The cell has a second surface facing the top of the vehicle. The first pole and the second pole are arranged on the second surface.

In some examples of the present disclosure, multiple battery units are provided, and the multiple battery units are connected in series.

In some examples of the present disclosure, the multiple battery units are arranged in an array to form a battery unit array. The battery unit array includes multiple rows of battery unit groups. The multiple rows of battery unit groups are arranged sequentially along the first direction. An active safety device is connected respectively between two battery units that are arranged in two adjacent rows of battery unit groups and are electrically connected to each other.

In some examples of the present disclosure, the active safety device is a relay or a fuse.

In some examples of the present disclosure, a ratio of the length of the at least one cell to the length of the vehicle ranges from 0.2 to 0.8.

In some examples of the present disclosure, the length of the cell 1 00 ranges from 600 mm to 2500 mm.

The present disclosure further provides an electric vehicle, including the above-mentioned battery pack.

Compared with the related art, beneficial effects of the present disclosure are as follows: the battery pack of the present disclosure includes at least one battery unit. The battery unit includes at least one battery string. The battery string includes one or at least two cells. A voltage difference across the battery string is less than or equal to 60 V. When the battery string includes at least two cells, the cells in the battery string are arranged sequentially along a first direction, and the first direction is parallel to a direction from the tail of the vehicle to the head of the vehicle. Therefore, by providing the scheme above, the voltage difference across the battery string formed by cells arranged in the direction from the tail of the vehicle to the head of the vehicle is relatively low. Therefore, in the driving process of the vehicle, even if a short circuit occurs in a string of cells in this direction after an impact, thanks to the relatively low voltage of the string of cells, the influence of the short circuit on the battery pack is relatively small. Therefore, a voltage generated by the battery pack when the short circuit occurs in the battery string can be relatively reduced, and a high-voltage breakdown or a high-voltage short-circuit of the battery pack can be prevented, thereby reducing a probability of catching fire and explosion of the battery pack, and in addition, the occurrence of an arc phenomenon can be reduced, thereby improving the safety of the battery pack.

Additional aspects and advantages of the present disclosure will be set forth, in part, from the following description, and in part will become apparent from the following description, or may be learned by practice of the present disclosure.

### BRIEF DESCRIPTION OF THE DRAWINGS

FIG. 1 is a schematic structural diagram of a battery pack according to an embodiment of the present disclosure;
FIG. 2 is a schematic diagram of the impact on cells in a battery pack after the bottom of a vehicle is impacted by a hard object in the related art;
FIG. 3 is another schematic structural diagram of a battery pack according to an embodiment of the present disclosure;
FIG. 4 is another schematic structural diagram of a battery pack according to an embodiment of the present disclosure;
FIG. 5 is another schematic structural diagram of a battery pack according to an embodiment of the present disclosure;
FIG. 6 is a schematic structural diagram of a cell according to an embodiment of the present disclosure;
FIG. 7 is another schematic structural diagram of a battery pack according to an embodiment of the present disclosure;
FIG. 8 is a schematic diagram of the impact on a cell in a battery pack after the bottom of a vehicle is impact by a hard object according to an embodiment of the present disclosure;
FIG. 9 is a cross-sectional view of a cell according to an embodiment of the present disclosure;
FIG. 10 is a schematic diagram of an electrode core assembly encapsulated in an encapsulation film according to an embodiment of the present disclosure;
FIG. 11 is another schematic diagram of an electrode core assembly encapsulated in an encapsulation film according to an embodiment of the present disclosure; and
FIG. 12 is a schematic diagram of a recess formed in a third surface of a metal housing according to an embodiment of the present disclosure.

### DETAILED DESCRIPTION

Embodiments of the present disclosure are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary and used only for explaining the present disclosure, and should not be construed as a limitation on the present disclosure.

In the description of the present disclosure, it should be understood that orientation or position relationships indicated by the terms such as "center", "longitudinal", "lateral", "length", "width", "thickness", "up", "down", "front", "back", "left", "right", "vertical", "horizontal", "top", "bottom", "inside", "outside", "axial", "radial", and "circumferential" are based on orientation or position relationships shown in the accompanying drawings, and are used only for ease and brevity of illustration and description of the present disclosure, rather than indicating or implying that the mentioned apparatus or component needs to have a particular orientation or needs to be constructed and operated in a particular orientation. Therefore, such terms should not be construed as limiting of the present disclosure.

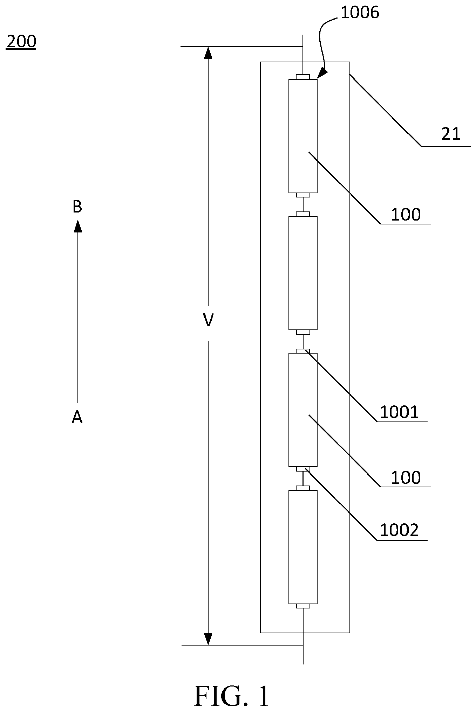

Referring to FIG. 1, a battery pack 200 in an embodiment of the present disclosure may be applied to an electric vehicle to provide power to the electric vehicle. The electric vehicle may be, for example, a passenger vehicle or a commercial vehicle, and the like. The battery pack 200 includes at least one battery unit 21. The battery unit 21 includes at least one battery string 1006. The battery string 1006 includes one or at least two cells 100. A voltage difference V across the battery string 1006 is less than or equal to 60 V.

When the battery string 1006 includes at least two cells 100, the cells 100 in the battery string 1006 are arranged sequentially along a first direction AB, and the first direction AB is parallel to a direction from the head of the vehicle to the tail of the vehicle.

It may be understood that a vehicle usually has three dimensions: length, width, and height. The length of the vehicle is defined as a distance from the tail of the vehicle to the head of the vehicle. The width of the vehicle is defined as a distance between the doors on the left and right sides. The height of the vehicle refers to the distance from the bottom of the vehicle to the top of the vehicle. For most vehicles, the length of the vehicle is usually the largest dimension of the vehicle. Therefore, the first direction AB may be defined as a length extension direction of the vehicle, that is, a maximum dimension direction of the vehicle.

In some embodiments, the battery unit 21 may include only one battery string 1006. The battery string 1006 includes multiple cells 100. The multiple cells 100 are arranged sequentially along the first direction AB. That is, all the cells 100 in the battery unit 21 are arranged sequentially along the first direction. The cells 100 in the battery string 1006 may be connected in series. For example, adjacent cells 100 may be connected in series, so as to implement the series connection of the multiple cells. In this case, the voltage difference across the battery string 1006 is defined as a voltage difference across a string of cells connected in series.

In some other embodiments, the battery string 1006 may include only one cell 100. In this case, the voltage difference across the battery string 1006 is defined as a voltage difference between positive and negative electrodes of the cell 100.

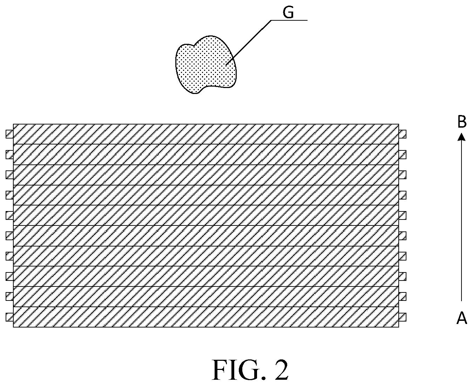

In a conventional battery pack, as shown in FIG. 2, to maximize battery capacity, a number of cells may be arranged in the battery pack. When a number of cells are arranged along the direction from the tail of the vehicle to the head of the vehicle (the first direction AB), once the bottom of the vehicle is impacted by a hard object G in the driving process of the vehicle, the impact on the bottom of the vehicle usually lasts from the head of the vehicle to the tail of the vehicle, so that all the cells (the cells in the shaded part in the figure) arranged in the battery pack from the head of the vehicle to the tail of the vehicle may be impacted to deform and rupture together. As a result, a short circuit occurs in a number of cells, the battery pack generates a higher voltage, and the battery tends to catch fire and explode.

In the embodiment of the present disclosure, the voltage difference V across the battery string 1006 does not exceed 60 V That is, the voltage difference across the battery string formed by the cells arranged in the direction from the tail of the vehicle to the head of the vehicle is relatively small. Therefore, in the driving process of the vehicle, even if a short circuit occurs in all the cells 100 in the battery string 1006 arranged along the direction from the head of the vehicle to the tail of the vehicle after an impact, because the voltage of the battery string 1006 is relatively low, the short circuit is a low voltage short circuit. That is, the voltage generated by the battery pack when a short circuit occurs in the battery string 1006 may be relatively low. Therefore, a high-voltage breakdown or a high-voltage short-circuit of the battery pack can be prevented, thereby reducing a probability of fire and explosion of the battery pack, and in addition, the occurrence of an arc phenomenon can be reduced, to effectively prevent thermal runaway and thermal spread between cells, thereby improving the safety of the battery pack.

In addition, the voltage difference across the battery string 1006 is kept from exceeding 60 V, so that the occurrence of an arc phenomenon can be reduced, and the energy storage capacity of the battery pack can be improved as much as possible.

Further, the voltage difference V across the battery string 1006 is less than or equal to 45 V. The voltage difference V across the battery string 1006 is kept relatively low, so that the impact on the battery pack can be further relatively reduced when a short circuit occurs in the battery string 1006, to avoid problems such as a breakdown of the battery pack due to a high voltage generated by the battery pack when a short circuit occurs in the battery string 1006, thereby preventing the occurrence of an arc phenomenon. The voltage difference V across the battery string 1006 may range from 20 V to 40 V. For example, the voltage difference V may be 40 V

It is found that, through a large number of arc test experiments, under the condition that the battery capacity is increased as much as possible, the voltage difference across the battery string 1006 formed by all the cells arranged along the travel direction of the vehicle (which may also be understood as the direction from the head of the vehicle to the tail of the vehicle) is kept from exceeding 60 V, and the battery pack can be effectively prevented from catching fire. The experimental data are shown in the following table:

| Voltage difference | 10V | 45 V | 60 V | 80 V |
|---|---|---|---|---|
| Experimental result | No arcing. Safety requirements are met. | Slight arcing, no fire, no smoke. Safety requirements are met. | Arcing, no fire, no smoke. Safety requirements are met. | Obvious arcing, fire, smoke. Safety requirements fail to be met. |

The above experimental data show that when the voltage difference across the battery string 1006 does not exceed 60 V, the battery pack does not catch fire and produce smoke, so that power requirements can be met and the safety performance of the battery pack can be improved.

The arc test experiments may be carried out using an existing arc test method. In the experiment, the voltage difference across the battery string was changed, and then the test car was driven to ravel on the test road with obstacles to observe the fire or smoke of the battery pack.

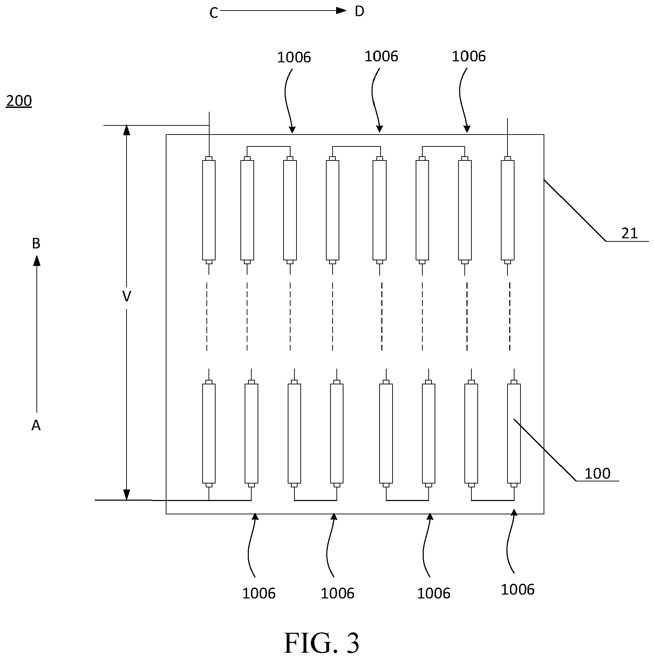

Referring to FIG. 3, in an embodiment of the present disclosure, the battery unit 21 includes multiple battery strings 1006. The multiple battery strings 1006 are arranged sequentially along a second direction CD. The second direction CD is a width direction of the vehicle. The voltage difference V across each battery string 1006 is less than or equal to 60 V. For example, the voltage difference across each battery string 1006 may be 45 V or 50 V

A quantity of cells 100 in the battery string 1006 is not specifically limited. For example, the quantity may be 4 or 6, provided that the voltage difference across the battery string 1006 does not exceed 60 V.

The cells 100 in the same battery string 1006 are connected in series. The battery strings 1006 may be connected in parallel or in series or may be connected in series and in parallel. For example, adjacent battery strings 1006 are connected in series. Alternatively, two battery strings 1006 may be connected in parallel and then connected in series to another battery string 1006, which is not specifically limited.

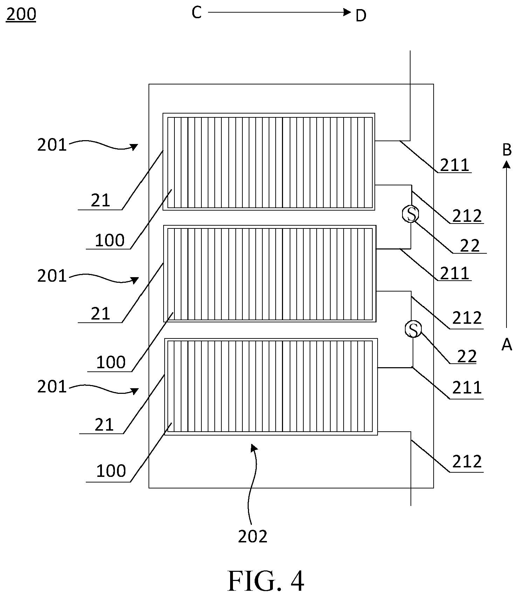

As shown in FIG. 4, in an embodiment of the present disclosure, multiple battery units 21 are provided, and the multiple battery units 21 are connected in series. Specifically, the battery unit 21 includes a first electrode lead-out end 211 and a second electrode lead-out end 212 for drawing a current. The first electrode lead-out end 211 of one battery unit 21 and the second electrode lead-out end 212 of the other battery unit 21 in two adjacent battery units 21 are electrically connected, thereby implementing a series connection.

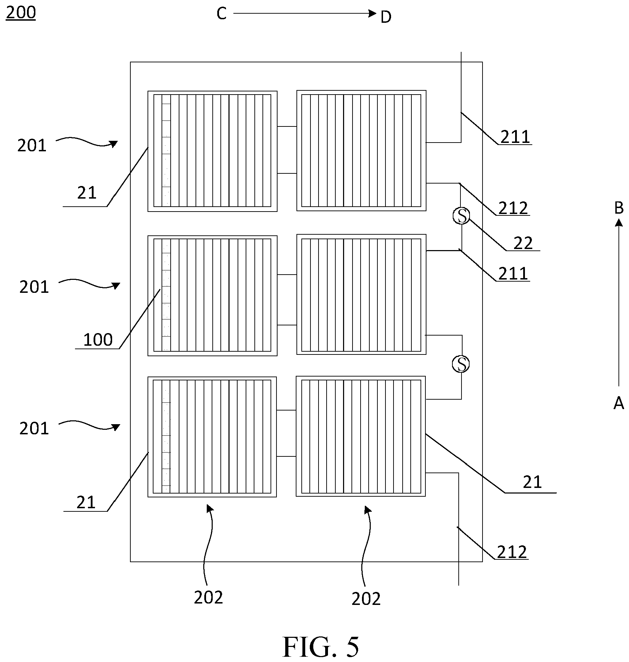

The multiple battery units 21 are arranged in an array to form a battery unit array. The battery unit array includes multiple rows of battery unit groups 201. The multiple rows of battery unit groups 201 are arranged sequentially along the first direction AB. It may also be understood that each row of cell groups 202 includes multiple battery units arranged sequentially along the first direction AB. As shown in FIG. 4, the battery unit array may include only one column of battery unit groups 202. Alternatively, as shown in FIG. 5, the battery unit array may include multiple columns of battery unit groups 202. The multiple columns of battery unit groups 202 are arranged sequentially along the second direction CD. The two adjacent battery units 21 in the same row of battery unit groups 201 are connected in series. Two adjacent rows of battery unit groups 201 are also connected in series. The two adjacent rows of battery unit groups are electrically connected by an active safety device 22.

The active safety device 22 is connected respectively between two battery units 21 that are arranged in two adjacent rows of battery unit groups 201 and are electrically connected to each other.

As shown in FIG. 4, each row of battery unit groups has one battery unit 21. Therefore, in the two battery units 21 of the two adjacent rows of battery unit groups, the first electrode lead-out end 211 of one battery unit 21 and the second electrode lead-out end 212 of the other battery unit 21 are electrically connected by the active safety device 22. The active safety device 22 includes, but is not limited to, a relay, a fuse, or another control switch. The active safety device 22 is used to automatically cut off the connection between the two adjacent rows of battery unit groups when the current between the two adjacent rows of battery unit groups is excessively large. In the embodiment in FIG. 1, the active safety device is used to cut off the electrical connection between the two adjacent battery units 21 when the current between the two adjacent battery units 21 is relatively large.

When multiple battery units 21 in the same row have short-circuited cells, a high-voltage circuit is inevitably formed between the battery units 21, and the current in the circuit increases. The active safety device 22 is arranged between the two adjacent rows of battery unit groups, so that the connection between the two rows of battery units when a short circuit occurs is cut off, thereby further improving the safety of the battery pack.

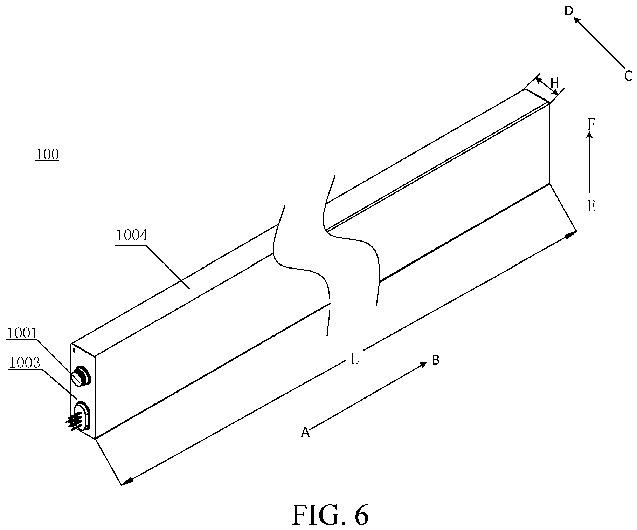

Referring to FIG. 6 and in conjunction with FIG. 1, in an embodiment of the present disclosure, the cell 1 00 is approximately a cuboid. The length of the cell 1 00 extends along the first direction AB. The cell 1 00 includes a first pole 1001 and a second pole 1002. The polarities of the first pole 1001 and the second pole 1002 are opposite to draw a current. For example, the first pole 1001 is a positive terminal and the second pole 1002 is a negative terminal.

The cell 100 has two opposite first surfaces 1003 in the first direction AB. The first pole 1001 and the second pole 1002 are arranged on the same first surface 1003 of the cell 100, or may be arranged on the two first surfaces 1003 respectively.

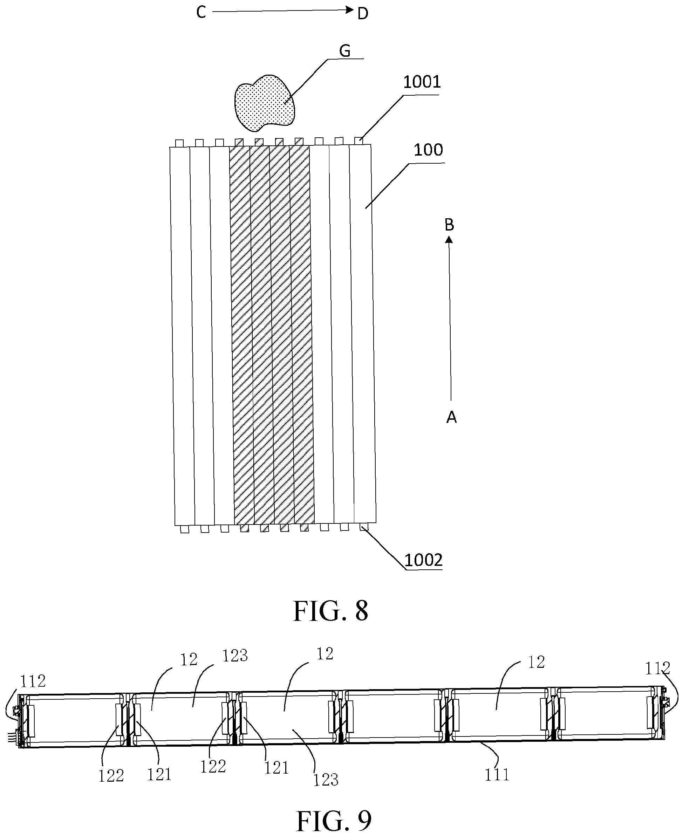

For one battery unit 21, when multiple cells 100 are provided in the battery unit 21, and the multiple cells 100 are arranged to form multiple rows of cell groups, the multiple rows of cell groups are arranged sequentially along the second direction CD. In an embodiment of the present disclosure, the length of the cell 1 00 extends along the first direction AB, and the multiple cells are arranged along the second direction CD, so that a quantity of cells vulnerable to damage can be reduced when the bottom of the vehicle is impacted. As shown in FIG. 8, multiple cells are arranged along the second direction CD. Once the bottom of the vehicle is impacted by a hard object G in the driving process of the vehicle, a quantity of cells affected by the impact of foreign objects (the cells in the shaded part of the figure) can be reduced, thereby preventing the cells in the entire battery pack from being all damaged. Therefore, the safety of the battery pack can be further improved through this embodiment.

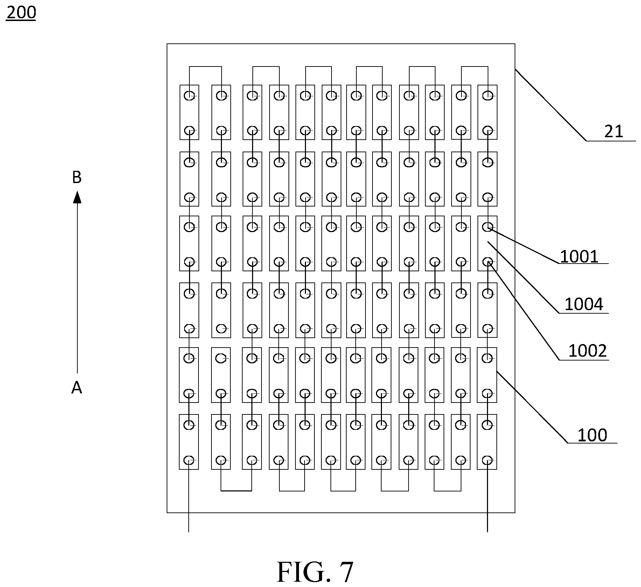

In other embodiments, as shown in FIG. 7 and in conjunction with FIG. 6, the first pole 1001 and the second pole 1002 of the cell 100 may be arranged on other surfaces of the cell. Specifically, the cell 100 has a second surface 1004 facing the top of the vehicle. The first pole 1001 and the second pole 1002 are arranged on the second surface 1004.

The cell 100 has two opposite second surfaces 1004 in a third direction EF. The third direction EF is the direction from the bottom of the vehicle to the top of the vehicle. The first pole 1001 and the second pole 1002 may be arranged on the second surface 1004 facing the top of the vehicle of the cell 100.

It should be noted that the first pole of the cell 100 at one end of the battery string 1006 is drawn out through a wire to correspond to the first electrode lead-out end 211 of the battery unit 21. The second pole of the cell 100 at the other end of the battery string is drawn out through a wire to correspond to the second electrode lead-out end 212 of the battery unit 21.

In an embodiment of the present disclosure, a ratio of the length of the cell 100 to the length of the vehicle ranges from 0.2 to 0.8. Specifically, in an embodiment of the present disclosure, the length L of the cell 100 ranges from 600 mm to 2500 mm (mm). For example, the length L may be 600 mm, 1200 mm or 2000 mm. When the length dimension of the cell 100 is within this range, the overall structure of the cell 100 is more in line with a standardized design, which can be universally used in different battery packs 200, to achieve a wide application range. The thickness of the cell 100 extends along the second direction CD (that is, the width direction of the vehicle), and the thickness H of the cell 100 may be greater than 10 mm. For example, the thickness H may range from 13 mm to 75 mm.

More specifically, by jointly referring to FIG. 6 to FIG. 12, the cell 100 includes a metal housing 11 and multiple electrode core assemblies 12 encapsulated in the metal housing 11 and arranged sequentially along the first direction AB. The multiple electrode core assemblies 12 may be connected in series to form an electrode core string. Each electrode core assembly 12 includes at least one electrode core.

The electrode core assembly 12 includes a first electrode 121 and a second electrode 122 for leading out a current. Further, the electrode core assembly 12 includes an electrode core assembly main body 123 and the first electrode 121 and the second electrode 122 electrically connected to the electrode core assembly main body 123. The first electrode 121 and the second electrode 122 are respectively arranged on two sides of the electrode core assembly main body 123 along the first direction AB. In two adjacent electrode core assemblies 12, the first electrode 121 of one electrode core assembly 12 and the second electrode 122 of the other electrode core assembly 12 are electrically connected to implement a series connection. The multiple electrode core assemblies 12 are connected in series, the capacity and voltage can be improved by using a single cell 100, the manufacturing process can be simplified, and the manufacturing cost can be reduced.

It should be noted that the series connection manner in this embodiment may be a series connection between the two adjacent electrode core assemblies 12. In a specific implementation, the first electrodes 121 and the second electrodes 122 on the two adjacent electrode core assemblies 12 may be directly connected or may be electrically connected by an additional conductive component. If the electrode core assembly 12 includes only one electrode core, the first electrode 121 and the second electrode 122 may be a positive tab and a negative tab of the electrode core respectively or a negative tab and a positive tab respectively. If the electrode core assembly 12 includes multiple electrode cores, lead-out components of the first electrode 121 and the second electrode 122 may be electrode leads. The "first" and "second" in the first electrode 121 and the second electrode 122 are only used to distinguish the names, rather than to limit the quantity. For example, the first electrode 121 and the second electrode 122 may include one or more electrodes.

Further, the metal housing 11 includes a housing body 111 provided with an opening and a cover plate 112. The cover plate 112 is hermetically connected to the opening of the housing body 11 to jointly define a sealed accommodating chamber. The electrode core string formed by the multiple electrode core assemblies 12 connected in series is accommodated in the accommodating chamber. A first electrode and a second electrode are respectively provided at both ends of the electrode core string. The first electrode of the electrode core string is the first electrode 121 of the electrode core assembly 12 arranged at one end of the electrode core string. The second electrode of the electrode core string is the second electrode 122 of the electrode core assembly 12 arranged at the other end of the electrode core string.

In some embodiments, the first electrode and the second electrode arranged at both ends of the electrode core string are drawn out from the cover plate 112 respectively, so that the first pole 1001 and the second pole 1002 of the cell 100 are formed respectively.

Specifically, in some implementations, the housing body 111 may be provided with two openings at both ends, and two cover plates 112 may be provided, so that the two cover plates 112 are hermetically connected to the two openings at both ends of the housing body 111 respectively to jointly define a sealed accommodating chamber. In this implementation, the first electrode and the second electrode arranged at both ends of the electrode core string may be drawn out from the two cover plates 112 respectively, so that the first pole 1001 and the second pole 1002 of the cell 100 are formed respectively. The first pole 1001 and the second pole 1002 are respectively arranged on the first surface 1003 of the cell 1 00 at both ends in the first direction AB. Certainly, in other embodiments, the first electrode and the second electrode arranged at both ends of the electrode core string may be drawn out from the same cover plate 112, so that the first pole 1001 and the second pole 1002 of the cell 100 are formed respectively. The first pole 1001 and the second pole 1002 are respectively arranged on the first surface 1003 of the cell 100 at the same end in the first direction AB.

In some other implementations, the housing body 111 may be provided with an opening only at one end, and one cover plate 112 may be provided, so that the one cover plate 112 is hermetically connected to the one opening at the one end of the housing body 111. In this implementation, the first electrode and the second electrode arranged at both ends of the electrode core string are drawn out from the same cover plate 112, so that the first pole 1001 and the second pole 1002 of the cell 100 are formed respectively. The first pole 1001 and the second pole 1002 are respectively arranged on the same end of the cell 100.

It may be understood that, in other embodiments, the first electrode and the second electrode arranged at both ends of the electrode core string may not be drawn out from the cover plate 112. The cover plate 112 is provided with the first pole 1001 and the second pole 1002. Further, a first electrode terminal and a second electrode terminal may both be arranged on the same cover plate 112, or may be arranged on two cover plates 112 respectively. In this case, the first electrode and the second electrode arranged at both ends of the electrode core string are respectively electrically connected to the first electrode terminal and the second electrode terminal on the cover plate 112, which is not described in detail herein.

It should be noted that the multiple electrode core assemblies 12 may be connected together in series and in parallel. For example, the multiple electrode core assemblies 12 may form two electrode core strings. Specifically, the multiple electrode core assemblies 12 may be divided into two parts. The electrode core assemblies 12 in each part are connected in series to form one electrode core string, and the two electrode core strings are connected in parallel. Certainly, the multiple electrode core assemblies 12 may be appropriately divided into three or more parts. The electrode core assemblies 12 in each part are connected in series to form one electrode core string, and multiple electrode core strings are connected in parallel. It may be understood that, the multiple electrode core assemblies 12 in the cell 100 are divided into multiple parts. The multiple electrode core assemblies 12 in each part are connected in series to form one electrode core string, so that each electrode core string can have a particular voltage to meet requirements of operation. Multiple electrode core strings are connected in parallel, so that the capacitances of the multiple electrode core strings can be added, to provide the cell 100 with a larger capacitance, which helps to prolong the power supply time of the cell 100.

Further, in an embodiment of the present disclosure, an encapsulation film 13 is further provided between the metal housing 11 and the electrode core assembly 12. That is, the electrode core assembly 12 is encapsulated in the encapsulation film 13. In this way, a secondary encapsulation of the electrode core assembly 12 can be implemented by using the encapsulation film 13 and the metal housing 11, which helps to improve the sealing effect of the cell 1 00. It may be understood that the encapsulation film 13 is further injected with an electrolyte solution. Therefore, in the above manner, a contact between the electrolyte solution and the metal housing 11 can further be avoided, and a corrosion of the metal housing 11 or a decomposition of the electrolyte solution can be avoided.

The air pressure between the metal housing 11 and the encapsulation film 13 is lower than that outside the metal housing 11. The air pressure in the encapsulation film 13 is lower than that between the metal housing 11 and the encapsulation film 13.

In the present disclosure, "pressure" is short for atmospheric pressure. Atmospheric pressure is defined as the atmospheric pressure acting on a unit area, which is equal to the weight of a vertical column of air extending upward to the upper boundary of the atmosphere on a unit area.

The air pressure between the metal housing 11 and the encapsulation film 13 is the air pressure in the space between the metal housing 11 and the encapsulation film 13. The air pressure is lower than that outside the metal housing 11. Therefore, in an embodiment of the present disclosure, the metal housing 11 and the encapsulation film 13 are in a negative pressure state. In this way, the metal housing 11 is recessed or deformed under the action of atmospheric pressure, and a gap between the metal housing 11 and the electrode core assembly 12 is reduced accordingly, the space for the movement of or the displacement between the electrode core assemblies 12 is reduced, so that the movement of the electrode core assemblies 12 and a relative displacement between the electrode core assemblies 12 can be reduced, thereby improving the stability of the cell 100, the strength of the cell 100, and the safety performance of the cell 100.

For example, an air extraction treatment may be performed on the space between the metal housing 11 and the encapsulation film 13, to allow the space between the metal housing 11 and the encapsulation film 13 to be in a negative pressure state. In this way, the metal housing 11 and the internal electrode core assembly 12 may be as close as possible to reduce an internal gap and prevent the electrode cores from moving in the metal housing. A relative displacement between the electrode cores is prevented, and the occurrence of current collector damage, diaphragm wrinkling, and active material falling off is reduced, thereby improving the mechanical strength of the entire cell 100, prolonging the service life of the cell 100, and improving the safety performance of the cell 100.

In an implementation, the air pressure value between the metal housing 11 and the encapsulation film 13 is P1. The value of PI may range from -100 Kpa to -5 Kpa. Further preferably, the value of PI may range from -75 Kpa to -20 Kpa. Certainly, a person skilled in the art may set the value of PI according to actual needs. It should be noted that the space between the metal housing 11 and the encapsulation film 13 may be in a vacuum state.

Further, the air pressure value in the encapsulation film 13 is P2. The value of P2 may range from -100 Kpa to -20 Kpa.

The relationship between P1 and P2 satisfies PI > P2. A ratio between P1 and P2 ranges from 0.05 to 0.85.

The values of P1, P2, and the ratio between P1 and P2 are limited to the foregoing ranges. The electrode core assembly 12 in the present technology adopts a secondary encapsulation mode. The electrode core assembly 12 of a battery is first encapsulated in the encapsulation film 13. To prevent the encapsulation film 13 from being damaged when excessive internal air pressure makes the encapsulation film 13 bulge outward, it is chosen that the air pressure between the metal housing 11 and the encapsulation film 13 is greater than the air pressure in the encapsulation film 13. A large number of experiments proved that when the ratio between P1 and P2 is in the foregoing range, the reliability of the secondary encapsulation of the cell 100 is better ensured. An interface between pole pieces of the cell 100 is ensured, and a gap between the pole pieces is avoided, to allow better conduction of lithium ions.

In an embodiment of the present disclosure, one encapsulation film 13 is included. The multiple electrode core assemblies 12 connected in series are encapsulated in the same encapsulation film 13. A connection of the first electrode 121 of one electrode core assembly 12 of the two electrode core assemblies 12 connected in series and the second electrode 122 of the other electrode core assembly 12 is arranged in the encapsulation film 13. That is, the encapsulation film 13 is integrally arranged, and the multiple electrode core assemblies 12 are encapsulated in the same encapsulation film 13.

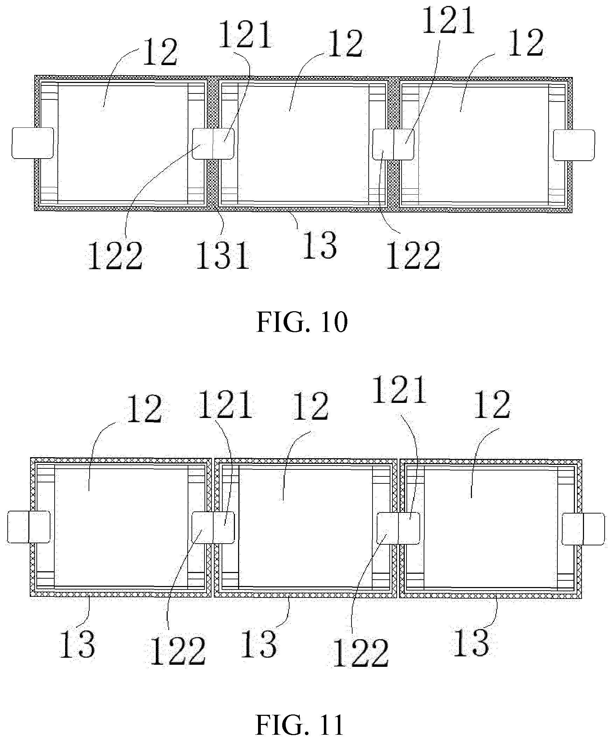

In practical applications, for example, as shown in FIG. 10, multiple electrode core assemblies 12 may be connected in series first, and then a whole piece of encapsulation film 13 is used to wrap the electrode core assemblies 12 connected in series. For example, the electrode core assemblies 12 connected in series may be placed on a part of the encapsulation film 13 (or a recess may be formed in a part of the encapsulation film 13 in advance, and then the multiple electrode core assemblies 12 connected in series may be arranged in the recess), the other part of the encapsulation film 13 is folded in the direction of the electrode core assemblies 12, and then the encapsulation film 13 in the two parts is heat-melted and sealed by hot-melt treatment. Therefore, the electrode core assemblies 12 connected in series are encapsulated in the same encapsulation film 13.

An encapsulation portion 131 is formed in the encapsulation film 13 at a position opposite to the first electrode 121 and/or the second electrode 122 to isolate two adjacent electrode core assembly main bodies 123. At least one of the first electrode 121 of one electrode core assembly 12 and the second electrode 122 of the other electrode core assembly 122 in the two adjacent electrode core assemblies 12 is arranged in the encapsulation portion 131. Multiple electrode core assembly main bodies 123 are isolated by the encapsulation portion 131 to prevent mutual circulation of electrolyte solutions of the multiple electrode core assemblies 12, so that the multiple electrode core assemblies 12 are kept from affecting each other, and the electrolyte solutions in the multiple electrode core assemblies 12 are prevented from decomposition due to an excessively large potential difference, thereby ensuring the safety and service life of the cell 1 00.

The encapsulation portion 131 may have various implementations. For example, the encapsulation film 13 may be fastened with a tie to form the encapsulation portion 131, or the encapsulation film 13 may be directly thermally fused and connected to form the encapsulation portion 131. Alternatively, a partition plate is directly arranged between the two electrode core assemblies 12 to form the encapsulation portion 131. A specific manner of the encapsulation portion 131 is not particularly limited.

In another embodiment of the present disclosure, as shown in FIG. 11, multiple encapsulation film 13 are included. At least one electrode core assembly 12 is encapsulated in one encapsulation film 13 to form an electrode core assembly. Multiple electrode core assemblies are connected in series.

In other words, the encapsulation films 13 have a one-to-one correspondence with the electrode core assemblies 12. Each electrode core assembly 12 is separately encapsulated in an encapsulation film 13. In this implementation, after the preparation of the multiple electrode core assemblies 12 is completed, an encapsulation film 13 may be separately covered outside each electrode core assembly 12, and then the multiple electrode core assemblies are connected in series.

At least one of the first electrode 121 and the second electrode 122 of the electrode core assembly 12 extends out of the encapsulation film 13. For example, the first electrode 121 may extend out of the encapsulation film 13, or the second electrode 122 may extend out of the encapsulation film 13, or both the first electrode 121 and the second electrode 122 may extend out of the encapsulation film 13. Through at least one of the first electrodes 121 and/or the second electrodes 122 extending out of the encapsulation film 13, the extended electrodes may be connected to other electrode core assemblies in series.

In an embodiment of the present disclosure, an arrangement direction of the multiple electrode core assemblies 12 is the first direction AB. A length direction of the electrode core assemblies 12 extends along the first direction AB. The length of the cell 100 also extends along the first direction AB. That is, the multiple electrode core assemblies 12 are arranged sequentially along a length direction of the cell 100, and the first electrodes 121 and the second electrodes 122 of the electrode core assemblies 12 are respectively arranged on both sides of the electrode core assemblies 12 along the first direction AB. That is, the multiple electrode core assemblies 12 adopt a "head-to-head" arrangement, so that the electrode core assemblies 12 are conveniently connected in series two by two, and the connection structure is simple. In addition, this arrangement can facilitate the manufacturing of a cell 100 with a longer length. Therefore, when the cell 100 is mounted in a battery pack housing, it may be not necessary to provide supporting structures such as beams and longitudinal beams. Instead, the cell 100 is directly mounted on the battery pack housing by using the metal housing 11 of the cell 100 for support. Therefore, the internal space of the battery pack can be saved, the utilization of the volume of the battery pack can be improved, and the weight of the battery pack can be reduced.

The multiple electrode core assemblies 12 are arranged in the cell 100, so that compared with an existing method that only one electrode core is arranged, the cell 100 with a longer length can be manufactured more conveniently. In a conventional battery, once the battery is longer, the length of a copper-aluminum foil used as a current collector inside may increase accordingly to cause a great increase in an internal resistance of the battery, making it impossible to meet current requirements of increasingly high power and fast charging. In the case of the same battery length, the embodiment of the present disclosure can greatly reduce the internal resistance of the battery and avoid problems caused by overheating of the battery in the case of high power output, fast charging, and the like.

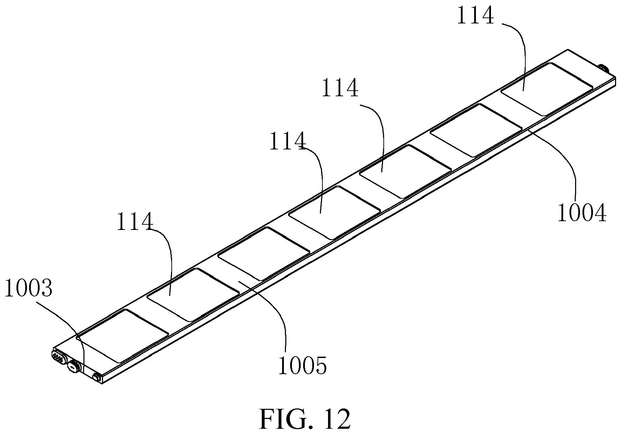

As shown in FIG. 12, the metal housing 11 has two opposite third surfaces 1005 along the second direction CD. The third surface 1005 is the largest surface of the cell 100, that is, the "large surface" of the cell 100. At least one third surface 1005 is recessed into the metal housing 11, making the metal housing 11 and the electrode core assembly 12 fit as closely as possible.

The metal housing 11 has a relatively small thickness and is a thin sheet. Therefore, a recess 114 in the third surface 1005 of the metal housing 11 may be, for example, a recess formed when air extraction is performed on the inside of the metal housing 11. That is, when air extraction treatment is performed on the space between the metal housing 11 and the encapsulation film 13 to make the air pressure between the metal housing 11 and the encapsulation film 13 lower than that outside the metal housing 11, with the progress of air extraction, the third surface 1005 of the metal housing 11 is likely to form the recess 114 into the metal housing 11.

In the normal use of the cell 100, the cell usually expands due to the expansion of the material, gas production of the electrolyte solution, and the like. The area with the largest expansion and deformation often appears on the large surface of the cell. Through this technology, the large surface is limited to be slightly recessed inward by vacuuming in an initial state of the battery, so that a squeeze between the batteries can be effectively relieved after the batteries expand, thereby improving the life, safety, and other performance of the battery and the entire system.

In some other embodiments, as shown in FIG. 12, an air extraction treatment may be performed on the inside of the metal housing 11 after a recess is formed in the third surface 1005 of the metal housing 11 in advance. Multiple recesses 114 may be provided in the third surface 1005 of the metal housing 11. For example, the multiple recesses 114 are formed in the third surface 1005 in advance, and the position of each recess 114 corresponds to the position of one electrode core assembly 12.

In some implementations, two opposite third surfaces 1005 of the metal housing 11 are both recessed inward, so as to clamp the electrode core assembly 12 through the recessed areas.

An exhaust hole may be provided in the metal housing 11, and an air extraction operation is performed on the space between the metal housing 11 and the encapsulation film 13 through the exhaust hole. The exhaust hole needs to be sealed. Therefore, a sealing member is further provided in the exhaust hole to seal the exhaust hole. The sealing member may be, for example, a plug or a rubber member, which is not limited.

In some implementations, before air extraction is performed in the metal housing 11, a gap is provided between the electrode core assembly 12 and an inner surface of the metal housing 11. The gap facilitates the convenient mounting of the electrode core assembly 12 into the metal housing 11. After air extraction is performed in the metal housing 11, the metal housing 11 is pressed against an outer surface of the electrode core assembly 12 along the second direction to clamp the electrode core assembly 12, thereby reducing the space for the electrode core assembly 12 to move inside the metal housing 11, and improving the safety performance of the cell 100.

In an embodiment of the present disclosure, the metal housing 11 has a high strength and a good heat dissipation effect. The metal housing 11 may include, but is not limited to, an aluminum housing or a steel housing. In some embodiments, the thickness of the metal housing 11 is 0.05 mm to 1 mm.

A thicker metal housing 11 increases the weight of the cell 100 and reduces the capacity of the cell 100. If the metal housing 11 is excessively thick, under the action of atmospheric pressure, the metal housing 11 does not recess or deform easily toward the side of the electrode core assembly 12. Therefore, the distance between the metal housing 11 and the electrode core assembly 12 may fail to be reduced, and the positioning function of the electrode core assembly 12 may fail to be effectively implemented. Moreover, if the metal housing 11 is excessively thick, the cost of air extraction is increased, causing an increase in the manufacturing cost.

In the present disclosure, the thickness of the metal housing 11 is limited to the foregoing range, so that the strength of the metal housing 11 can be ensured, and the capacity of the cell 100 is not reduced. In addition, the metal housing 11 can be deformed more easily in a negative pressure state, to reduce the distance between the metal housing 11 and the electrode core assembly 12, thereby reducing the movement of the electrode core assemblies 12 inside the metal housing 11 and a relative displacement between the electrode core assemblies 12.

In an embodiment of the present disclosure, the encapsulation film 13 includes a laminated non-metallic outer layer film and a non-metallic inner layer film. The inner layer film is arranged between the outer layer film and the electrode core assembly 12.

The inner layer film has a good chemical stability. For example, materials with anti-corrosion properties from electrolyte solutions may be used, such as polypropylene (PP), polyethylene (PE) or polyethylene terephthalate (PET), or may be a combination of the above materials.

The outer layer film is a protective layer, and the use of the outer layer film may prevent the permeation of air, especially water vapor, oxygen, and the like. The material of the outer layer film may be, for example, polyethylene terephthalate, polyamide (PA) or polypropylene, or may be a combination of the above materials.

In the encapsulation film 13 in this embodiment, the melting point of the outer layer film is greater than that of the inner layer film, so that the outer layer film does not melt during hot-melt sealing, and the inner layer film can be melted in time to ensure an excellent sealing performance. Further, the melting point difference between the outer layer film and the inner layer film ranges from 30°C to 80°C. For example, the melting point difference between the two may be 50°C, 70°C, or the like. The specific material selection may be determined according to actual needs.

The non-metallic outer layer film and the non-metallic inner layer film are bonded and joined by an adhesive. For example, the material of the outer layer film may be A PLURALITY OF, and the material of the inner layer film may be PET. The adhesive for bonding the two may be, for example, a polyolefin adhesive, to form a composite film by bonding.

In this embodiment, the electrode core assembly 12 is encapsulated by forming the encapsulation film 13 using a double-layer non-metallic film. Because the non-metallic encapsulation film 13 has a higher tensile strength and elongation at break, the restriction on the thickness of the cell 100 can be reduced, and the produced cell 100 can have a larger thickness. The thickness of the cell 100 in this embodiment may be increased in a wide range. For example, the thickness may be greater than 10 mm, for example, may range from 13 mm to 75 mm.

In some implementations of the present disclosure, the encapsulation film 13 may be an aluminum-plastic film.

In an embodiment of the present disclosure, the cell 100 is a lithium-ion battery.

In an embodiment of the present disclosure, in the same battery unit 21, among the cells arranged sequentially along the second direction CD, a gap is provided between two adjacent cells 100. A ratio of the gap to the thickness of the cell 100 ranges from 0.001 to 0.15.

It should be noted that the gap between the two adjacent batteries may vary as battery operating time increases. However, during or after the operation of the batteries or before the batteries leave the factory, provided that the ratio of the gap between the batteries to the thickness is within the range defined in the present disclosure, the gap falls within the protection scope of the present disclosure.

In the present disclosure, a particular gap is reserved between the cells 100 to reserve a buffer space for the expansion of the cells 100.

The expansion of the cell 100 is related to the thickness of the cell 100. When the thickness of the cell is larger, the cell 100 is more prone to expansion. In the present disclosure, the ratio of the gap between the cells 100 to the thickness of the cells 100 is limited within a range from 0.001 to 0.15, so that the space of the battery pack 200 can be fully utilized, thereby improving the utilization of the battery pack 200, and in addition, a better buffering effect can be provided for the expansion of the cells 100.

In addition, heat may be generated when the cell 100 expands. When a particular gap is reserved between the cells 100, the gap may be used as a heat dissipation channel such as an air duct. The surface of the cell 100 with a larger area has a better heat dissipation effect, so that the heat dissipation efficiency of the battery pack 200 can be improved, thereby improving the safety performance of the battery pack 200.

In the foregoing solution, for the gap between the cells 100, it may be understood that no structural member is provided between the cells 100, and simply a particular space is reserved. It may also be understood as that the cells 100 are provided with another structural member, so that the cell 100 is separated from the cell 100 by the structural member.

It should be noted that, when a structural member is provided between the cells 100, the gap between the cells 100 should be understood as the distance between the cells 100 on both sides of the structural member, but cannot be understood as the distance between the structural member and the cell 100.

It should be noted that, a particular gap may be separately reserved between the structural member and the cells 100 on both sides of the structural member, or the structural member may be in direct contact with the cells 100 on both sides of the structural member. When the structural member is in direct contact with the cells 100 on both sides of the structural member, the structural member has a particular flexibility, to provide buffering for the expansion of the cells 100. The structural member includes, but is not limited to, an aerogel, a thermally conductive structural adhesive or a thermal insulation cotton.

The present disclosure further provides an electric vehicle including the foregoing battery pack 200. The electric vehicle and the foregoing battery pack 200 have the same advantages compared with the related technologies. Details are not described herein again.

In the description of the present disclosure, it should be noted that, unless otherwise specified and limited, the terms such as "installation", "interconnection", and "connection" should be understood in a broad sense. For example, the connection may be a fixing connection, a detachable connection, or an integral connection; or the connection may be a mechanical connection, or an electrical connection; or the connection may be a direct connection, an indirect connection through an intermediary, or an internal connection between two elements. For those of ordinary skill in the art, the specific meanings of the foregoing terms in the present disclosure may be understood according to specific situations.

In the description of this specification, the description of the reference terms such as "embodiment", "specific embodiment", "example" means that the specific features, structures, materials or characteristics described with reference to the embodiment or example are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of the present disclosure have been shown and described, a person skilled in the art can understand that changes, alternatives, and modifications can be made in the embodiments without departing from the principle and the purpose of the present disclosure, and the scope of the present disclosure is as defined by the claims and their equivalents.

## Claims

1. A battery pack for powering a vehicle, comprising: at least one battery unit, wherein the battery unit comprises at least one battery string, the battery string comprises one or at least two cells, and a voltage difference across the battery string is less than or equal to 60 V; and
when the battery string comprises at least two cells, the cells in the battery string are arranged sequentially along a first direction, and the first direction is parallel to a direction from a tail of the vehicle to a head of the vehicle.

2. The battery pack according to claim 1, wherein the voltage difference across the battery string is less than or equal to 45 V

3. The battery pack according to claim 2, wherein the voltage difference across the battery string ranges from 20 V to 40 V.

4. The battery pack according to any one of claims 1 to 3, wherein the battery unit comprises a plurality of battery strings, the plurality of battery strings are arranged sequentially along a second direction, and the second direction is a width direction of the vehicle.

5. The battery pack according to claim 4, wherein the battery strings are connected in series and/ or in parallel.

6. The battery pack according to claim 1, wherein when the battery string comprises at least two cells, the at least two cells in the battery string are connected in series.

7. The battery pack according to claim 1, wherein a length of the cell extends along the first direction.

8. The battery pack according to claim 7, wherein the cell comprises a first pole and a second pole, and the cell has two opposite first surfaces along the first direction; and
the first pole and the second pole are arranged on the same first surface of the cell, or arranged on the two first surfaces of the cell respectively.

9. The battery pack according to claim 1, wherein the cell comprises a first pole and a second pole, the cell has a second surface facing a top of the vehicle, and the first pole and the second pole are arranged on the second surface.

10. The battery pack according to claim 1, wherein a plurality of battery units are provided, and the plurality of battery units are connected in series.

11. The battery pack according to claim 10, wherein the plurality of battery units are arranged in an array to form a battery unit array, the battery unit array comprises a plurality of rows of battery unit groups, the plurality of rows of battery unit groups are arranged sequentially along the first direction, and an active safety device is connected respectively between two battery units that are arranged in two adjacent rows of battery unit groups and are electrically connected to each other.

12. The battery pack according to claim 11, wherein the active safety device is a relay or a fuse.

13. The battery pack according to claim 1, wherein a ratio of a length of the at least one cell to a length of the vehicle ranges from 0.2 to 0.8.

14. The battery pack according to claim 1, wherein a length of the cell 100 ranges from 600 mm to 2500 mm.

15. An electric vehicle, comprising the battery pack according to any one of claims 1 to 14.
